# EUROPEAN PATENT SPECIFICATION

(11) **EP 1 759 960 B1**
(45) Date of publication and mention of the grant of the patent: **18.02.2009**
(21) Application number: 06017577.5
(22) Date of filing: 23.08.2006
(51) Int. Cl.: B62D 25/07, B60J 10/00, B60R 13/04

(54) **Roof structure for vehicle**
Dachaufbau eines Fahrzeugs
Structure de toit pour véhicule

(30) Priority: 01.09.2005 JP 2005253413
(43) Date of publication of application: 07.03.2007
(73) Proprietor: Honda Motor Co., Ltd., Tokyo 107-8556 (JP)
(72) Inventor: Kuribayashi, Akihiko c/o Honda R&D, Ltd., Saitama (JP); Suzuki, Hideaki c/o PSG Co., Ltd., Tochigi (JP); Walton, Derek c/o Honda R&D Europe Ltd., Swindon, Wiltshire SN3 4TZ (GB)
(74) Representative: Trossin, Hans-Jürgen

(56) References cited:
- DE-A1- 4 322 730
- JP-A- 1 044 386
- US-A- 5 820 198
- US-A1- 2002 021 029

## Description

The present invention relates to a vehicular roof structure including a roof panel made of glass, transparent resin or the like, according to the preamble of claim1.

JP 01 044386 A discloses such a roof structure with a side frame holding a translucent roof plate together with side mouldings including a side moulding body for covering a side edge of the roof panel. A groove is formed between a side panel and the side moulding.

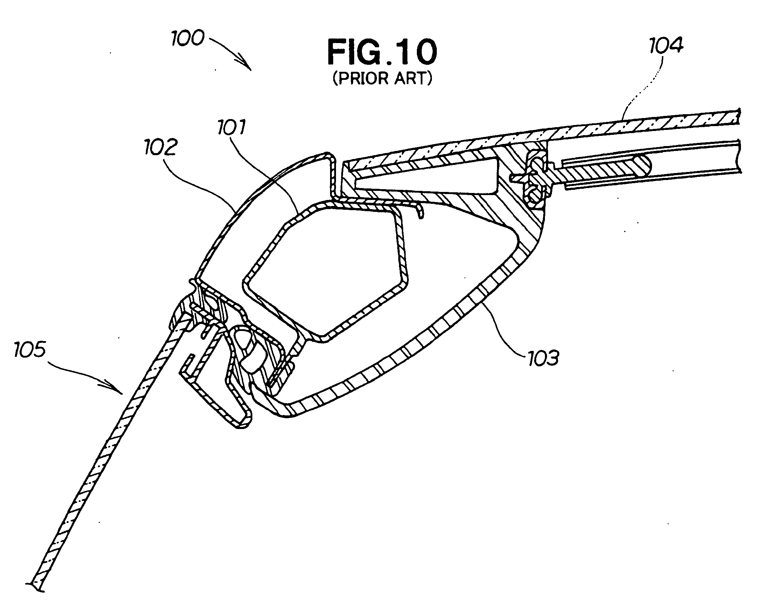

In conventional vehicular roof structures, glass or transparent-resinous roof panels are attached through roof mouldings to roofs of vehicle bodies. One example of the roof structures is known from, for example, JP-A-2002-104240. In the disclosed roof structures, a glass or transparent-resinous roof panel is attached to a frame provided on a side panel of a vehicular body. This roof structure will be described with reference to Fig. 10 hereof.

In Fig. 10, the roof structure designated generally at 100 includes a roof rail 101 and a side panel 102 covering the roof rail 101. A frame 103 is provided on the side panel 102. A roof panel 104 made of glass or transparent resin is attached to the frame 103. Reference numeral 105 denotes a door.

In the roof structure 100, raindrops on the roof panel 104 can undesirably flow down the side panel 102 to the door 105 because the side panel 102 is positioned adjacent the roof panel 104.

Moreover, an undesired clearance can be made between the roof panel 104 and the frame 103 or between the frame 103 and the side panel 102, as viewed in plan. If such a clearance is formed, the roof structure 100 looks ugly.

The roof structure 100 should be improved to prevent rainwater on the roof panel from flowing to the door and provide improved outer appearance of an assembly of the roof panel, the frame and the side panel.

Further conventional vehicular roof structures are known from the art.

US 5,820,198 A discloses mouldings to be used for a centre pillar of a vehicle preventing water from passing into the inside of the vehicle between the windows and the centre pillar.

US 2002-021029 A1 proposes a vehicle roof module consisting of a transparent roof skin constituting the outer shell of a sandwich structure, and of an inner shell of the sandwich structure.

DE 43 22 730 A1 discloses a roof structure similar to that of the preamble of claim 1 with the difference that an end portion of a lip of the side moulding is arranged spaced apart from the roof rail.

An object of the present invention is to provide an improved vehicular roof structure, which allows that the front and rear end sections of the side moulding can be moulded to conform to configurations of components surrounding the front and rear end sections.

According to an aspect of the present invention, there is provided a roof structure for a vehicle, which comprises: a roof panel provided on a vehicle body of the vehicle; a side moulding including a side moulding body covering a side edge of the roof panel, and a lip projecting outwardly from the side moulding body, the lip being located lower than a top surface of the side moulding body; a roof rail supporting the side moulding; a side panel disposed outwardly of and connected to the roof rail; a drip moulding extending along the side moulding and covering a connection of the roof rail and the side panel; and the drip moulding and the side moulding jointly defining a drainage channel with the drip moulding clamping a tip end portion of the lip against the roof rail.

The drainage channel receives rainwater from the roof panel and allows the rainwater to flow therealong, so that the rainwater does not flow towards the side panel. It is thus possible to prevent rainwater on the panel from dropping to passengers when they get into or out of the vehicle.

Since the tip end portion of the lip is clamped against the roof rail, the tip end portion does not oscillate vertically.

Since the drip moulding covers the connection of the roof rail and the side panel, the roof structure provides improved outer appearance.

According to the invention, the side moulding is separated into an injection-moulded front end section, an extruded central section of predetermined cross-section, and an injection-moulded rear end section.

Desirably, the front end section has a front projection projecting outwardly therefrom, and the rear end section has a rear projection projecting outwardly therefrom.

By positioning the front and rear projections in place relative to the side panel, the roof panel of the side moulding can be positioned in place relative to the side panel.

Preferably, the front end section of the side moulding has a ramp region where a distance between the lip and the top surface of the side moulding body becomes gradually short forwardly of the front end section such that a depth of the drainage channel becomes gradually small forwardly of the front end section.

The drainage channel allows rainwater therein to flow smoothly forwardly of the front end section of the side moulding.

Desirably, the roof panel is a glass panel.

A preferred embodiment of the present invention will be described in detail below, by way of example only, with reference to the accompanying drawings, in which:
Fig. 1 is a perspective view of a vehicle including a roof structure according to the present invention;
Fig. 2 is a view showing on an enlarged scale a part of the vehicle, encircled by a circle 2 of Fig.1;
Fig. 3 is a perspective view of a roof assembly of the roof structure;
Fig. 4 is a view showing on an enlarged scale a part of the assembly, encircled by a circle 4 of Fig. 3;
Fig. 5 is a view showing on an enlarged scale a part of the assembly, encircled by a circle 5 of Fig. 3;
Fig. 6 is a cross-sectional view taken along line 6-6 of Fig. 1;
Fig. 7 is a view showing on an enlarged scale a part of the vehicle, encircled by a circle 7 of Fig. 1;
Fig. 8 is a cross-sectional view taken along line 8-8 of Fig. 7;
Fig. 9 is a cross-sectional view taken along line 9-9 of Fig. 7 with a drip moulding omitted; and
Fig. 10 is a cross-sectional view of a conventional vehicular roof structure.

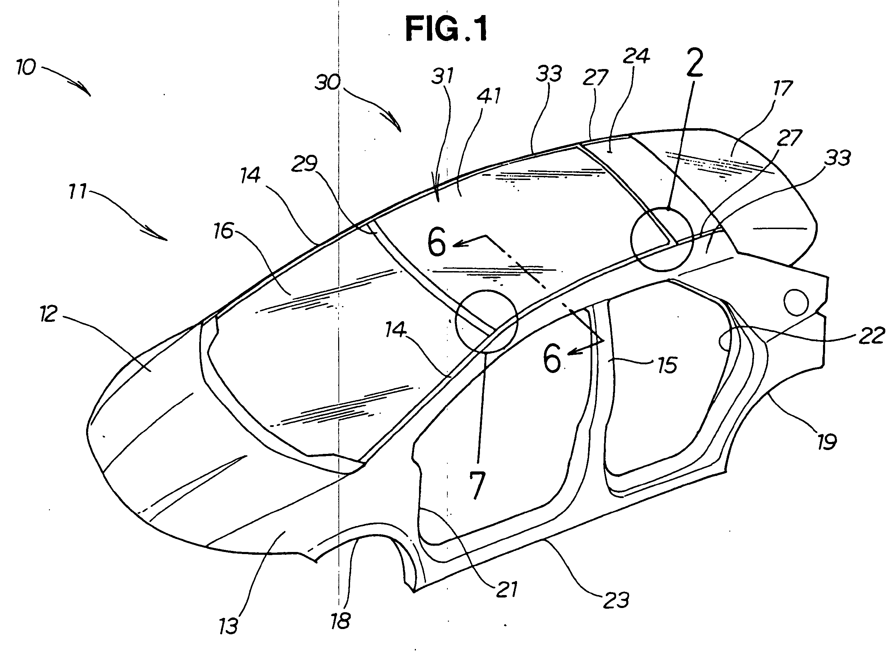

As shown in Fig. 1, a vehicle 10 includes a vehicle body 11. The vehicle body 11 has a bonnet 12, a front fender 13, a front pillar 14, and a center pillar 15. The vehicle body 11 is provided with a windshield 16 and a rear glass 17. The vehicle body 11 also has a front wheel house 18, a rear wheel house 19, a front door opening 21, a rear door opening 22, a side sill 23, a roof (top) portion 24, right and left rear drainage channels 27, 27, and right and left side panels 33, 33. The vehicle body 11 is provided with a windshield moulding 29, and a roof assembly 31.

A roof structure 30 for the vehicle 10 according to the present invention will be discussed. For the sake of convenience, a detail description will be made as to a left side of the roof structure 30. It is to be noted that a right side of the roof structure 30 has the same arrangement as the left side and its detail description is omitted.

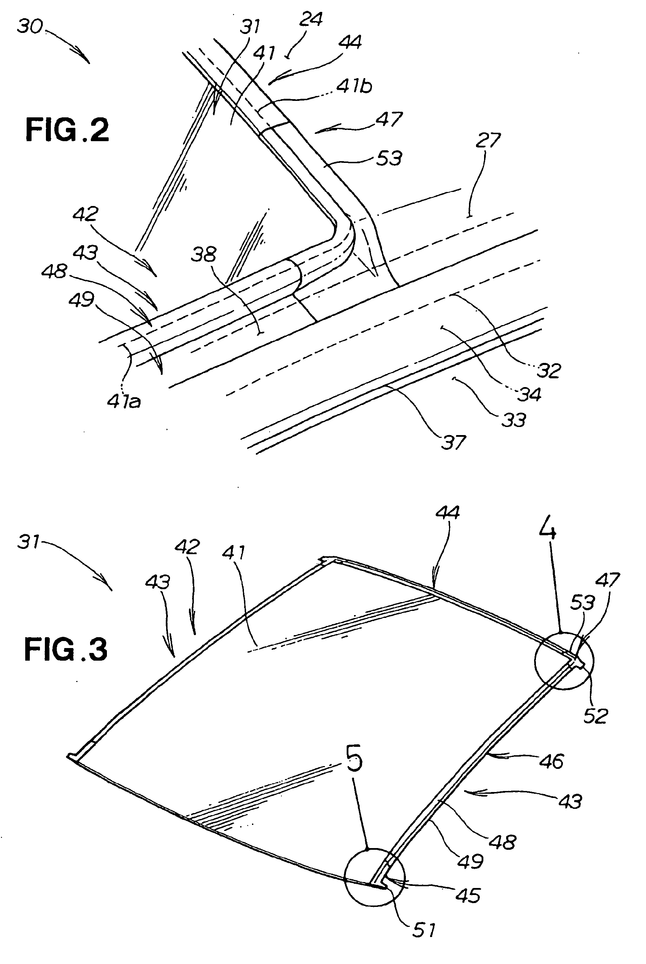

Referring to Fig. 2 and Fig. 3, the roof structure 30 includes the roof assembly 31 provided on the roof portion 24 of the vehicle body 11, and right and left roof rails 32 (only left one shown) of the vehicle body 11 for supporting the roof assembly 31.

The roof assembly 31 includes a roof panel 41 and a roof moulding assembly 42. The roof panel 41 is a transparent glass panel (hereinafter referred to as "glass panel 41"). The roof moulding assembly 42 is provided on right and left side edges 41a (only left one shown) and a rear edge 41b of the glass panel 41. More specifically, the roof moulding assembly 42 includes right and left side mouldings 43, 43 each provided on the respective side edge 41a, and a rear moulding 44 provided on the rear edge 41b.

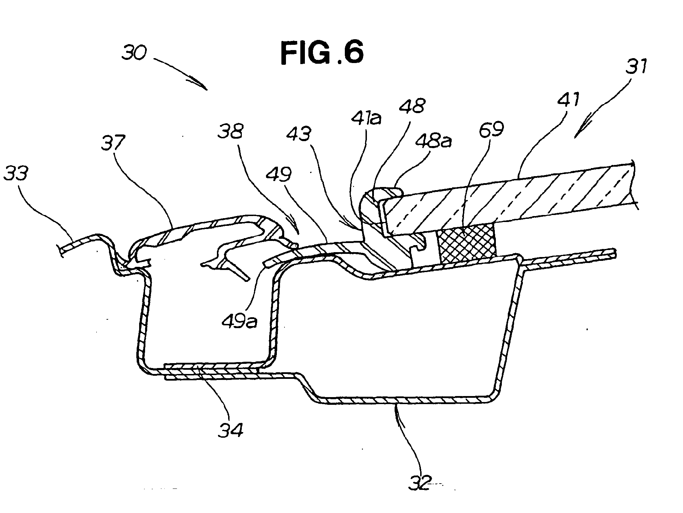

The structure 30 also includes the side panel 33 disposed externally of and connected to the roof rail 32 (see Fig. 6), and a drip moulding 37 extending along the length of the side moulding 43. The side moulding 43 and the drip moulding 37 define a drainage channel 38 for allowing rainwater therein to flow therealong.

The side moulding 43 includes a side moulding body 48, a lip 49 projecting outwardly from the side moulding body 48 (see also Fig. 6), front and rear projections 51, 52 projecting outwardly from front and rear ends of the side moulding 43, respectively, and a connection portion 53 connected to the rear moulding 44 and integral with the rear projection 52.

The side moulding 43 is separated into three sections, that is, a generally L-shaped front end section 43, a central section 46, and a generally L-shaped rear end section 47 connected to the rear moulding 44. The front end section 43 has any optional configuration achieved by injection moulding. The central section 46 has a predetermined cross-sectional configuration achieved by extrusion. The rear end section 47 has any optional configuration achieved by injection moulding. Since the front and rear end sections 45, 47 are injection-moulded, they can be properly configured taking into account the configurations of components surrounding the front and rear end sections 45, 47.

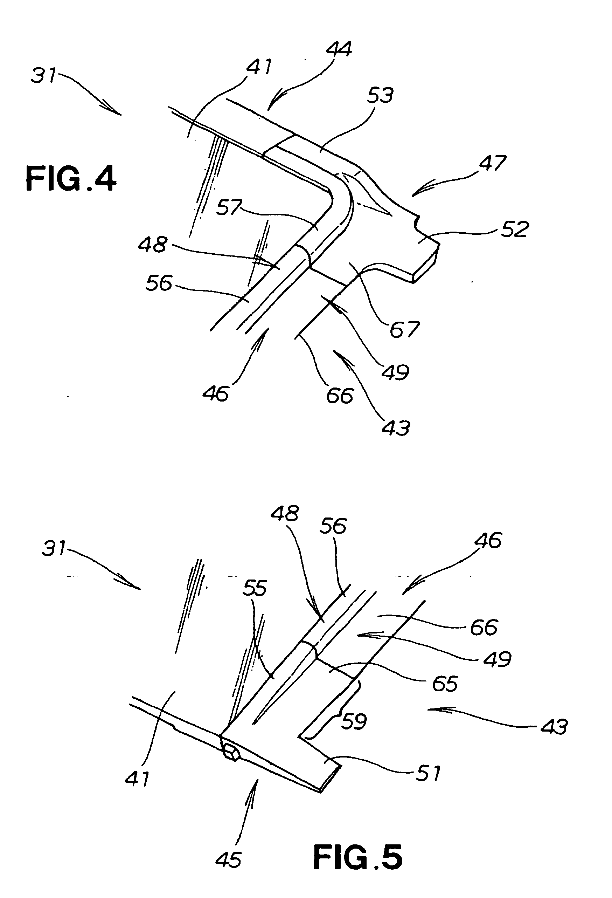

As shown in Fig. 4 and Fig. 5, the side moulding body 48 includes a first side moulding body 55 at the front end section 45, a second side moulding body portion 56 at the central section 46, and a third side moulding body portion 57 at the rear end section 47. A series of first, second and third side moulding body portions 55, 56, 57 are arranged in alignment.

The lip 49 includes a first lip portion 65 at the front end section 45, a second lip portion 66 at the central section 46, and a third lip portion 67 at the rear end section 47. A series of the first, second and third lip portions 45, 46, 47 are arranged in alignment.

The front end section 45 includes the first side moulding body portion 55, the first lip portion 65 and the front projection 51. The front end section 45 of the side moulding 43 has a ramp region 59. In the ramp region 59, a depth defined as a distance between a top surface of the first side moulding body portion 55 and the first lip portion 65 becomes gradually small forwardly of the front end section 45.

The central section 46 includes the second side moulding body portion 56 and the second lip portion 66. The second lip portion 66 is located at a predetermined depth from a top surface of the second side moulding body portion 56.

The rear end section 47 includes the third side moulding body portion 57, the third lip portion 67, the rear projection 52 and the connection portion 53. The third lip portion 67 is located at a predetermined depth from a top surface of the third side moulding body portion 57.

Turning to Fig. 6, the roof rail 32 of the vehicle body 11 supports the side moulding 43. The glass panel 41 is secured to the roof rail 32 through an adhesive material 69. The side moulding body 48 of the side moulding 43 covers the side edge 41a of the glass panel 41. The lip 49 of the side moulding 43 is located lower than a top surface 48a of the side moulding body 48.

The drip moulding 37 covers a connection 34 of the roof rail 32 and the side panel 33. The drip moulding 37 also covers a gap between a tip end portion 49a of the lip 49 and the side panel 33. With the drip moulding 37 covering the connection 34 and the gap, the roof structure 30 provides better outer appearance. The drip moulding 37 clamps the tip end portion 49a against the roof rail 32. Since the tip end portion 49a is held firmly against the roof rail 32, the tip end portion 49a does not oscillate vertically.

The drainage channel 38 defined by the drip moulding 37, the lip 49 and the side moulding body 48 can receive rainwater from the glass panel 41 and allows the rainwater to flow forwardly or rearwardly along the channel 38. The provision of the drainage channel 38 makes it possible to prevent rainwater on the glass panel 41 from flowing past the side panel 33 into the front or rear door opening 21, 22 (Fig. 1). Thus, rainwater flowing down from the glass panel 41 does not drop on passengers when they get into or out of the vehicle 10.

The combination of the drip moulding and the side moulding 43 to define the drainage channel 38 is advantageous because such a drainage channel can not be formed on the glass panel 41 itself. The provision of the drainage channel 38 makes it possible to use as a roof panel a large-sized transparent-glass panel providing a wide view.

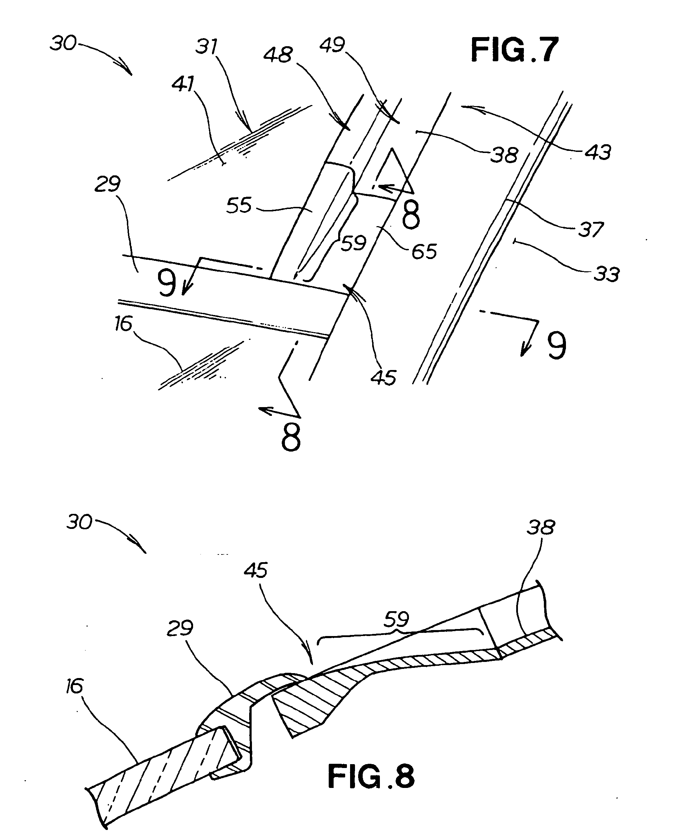

Referring to Fig. 7, in the ramp region 59 of the first end section 45 of the side moulding 43, the depth of the drainage channel 38 becomes gradually small forwardly of the front end section 45, so that the drainage channel 38 has no depth at a front end of the first lip portion 65. The front end of the first lip portion 65 of the front end section 45 has substantially the same level as the windshield moulding 29.

As shown in Fig. 8, since the drainage channel 38 is not blocked, rainwater in the channel 38 can flow smoothly forwardly.

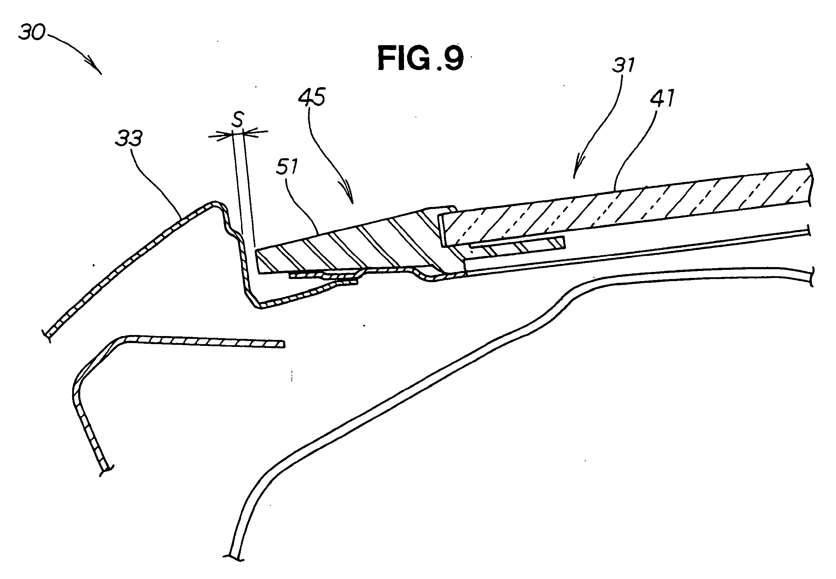

Turning to Fig. 9, the front projection 51 of the front end section 45 of the side moulding 43 is spaced a predetermined clearance S from the side panel 33. Likewise, although not shown, the rear projection 52 of the rear end section 47 of the side moulding 43 is spaced the same clearance from the side panel 33. The front and rear projections 51, 52 provide the advantage that the roof assembly 31 can be readily positioned relative to the side panel 33. More specifically, by spacing each of the front and rear projections 51, 52 a clearance of, e.g., 2 mm away from the side panel 33, the roof assembly 31 can be positioned in place relative to the side panel 33 without the need of any locating pins. It therefore becomes possible to appropriately assemble the roof assembly 31 to the side panel 33.

The front and rear projections 51, 52 are covered with the drip moulding 37 (not shown in Fig. 9). The clearance S is also covered with the drip moulding 37. Thus, a region defined by the side moulding 43, the drip moulding 37 and the side panel 33 provides improved appearance.

The foregoing roof structure 30 is preferred especially in case the roof panel 41 is made of glass. In another embodiment, the roof panel 41 may be made of a smoked glass panel.

A vehicular roof structure (30) includes a roof panel (41), a side moulding (43) provided on a side edge (41a) of the roof panel (41), a roof rail (32) supporting the side moulding (43), and a drip moulding (37) extending along the side moulding (43). The drip moulding (37) and the side moulding (43) jointly define a drainage channel (38) with the drip moulding (37) clamping a tip end (49a) of a lip (49) of the side moulding (43) against the roof rail (32).

## Claims

1. A roof structure (30) for a vehicle (10), comprising:
a roof panel (41) provided on a vehicle body (11) of the vehicle (10);
a side moulding (43) including a side moulding body (48) for covering a side edge (41 a) of the roof panel (41), and a lip (49) projecting outwardly from the side moulding body (48), the lip (49) being located lower than a top surface (48a) of the side moulding body (48);
a roof rail (32) for supporting the side moulding (43);
a side panel (33) disposed outwardly of and connected to the roof rail (32);
a drip moulding (37) extending along the side moulding (43) for covering a connection (34) of the roof rail (32) and the side panel (33); and
the drip moulding (37) and the side moulding (43) jointly defining a drainage channel (38) with the drip moulding (37) clamping a tip end portion (49a) of the lip (49) against the roof rail (32),
**characterized in that** the side moulding (43) is separated into an injection-moulded front end section (45), an extruded central section (46) of predetermined cross-section, and an injection-moulded rear end section (47).

2. The roof structure (30) of claim 1,
**characterized in that** the front end section (45) has a front projection (51) projecting outwardly therefrom, and the rear end section (47) has a rear projection (52) projecting outwardly therefrom.

3. The roof structure (30) of claim 1,
**characterized in that** the front end section (45) of the side moulding (43) has a ramp region (59) where a distance between the lip (49) and the top surface (48a) of the side moulding body (48) becomes gradually short forwardly of the front end section (45) such that a depth of the drainage channel (38) becomes gradually small forwardly of the front end section (45).

4. The roof structure (30) of claim 1,
**characterized in that** the roof panel (41) is a glass panel.

## Patentansprüche

1. Dachstruktur (30) für ein Fahrzeug (10), umfassend:
eine Dachplatte (41), die an einem Fahrzeugkörper (11) des Fahrzeugs (10) vorgesehen ist;
eine Seitenformteil (43), das einen Seitenformteilkörper (48) zum Abdecken eines Seitenrands (41 a) der Dachplatte (41) und eine Lippe (49), die von dem Seitenformteilkörper (48) auswärts absteht, umfasst, wobei die Lippe (49) niedriger als eine obere Fläche (48a) des Seitenformteilkörpers (48) angeordnet ist;
eine Dachschiene (32) zum Unterstützen des Seitenformteils (43);
eine Seitenplatte (33), die auswärts der Dachschiene (32) und mit der Dachschiene (32) verbunden angeordnet ist;
ein Abtropfformteil (37), das sich entlang des Seitenformteils (43) erstreckt, zum Abdecken einer Verbindung (34) der Dachschiene (32) und der Seitenplatte (33); und
das Abtropfformteil (37) und das Seitenformteil (43) gemeinsam einen Abflusskanal (38) definieren, wobei das Abtropfformteil (37) einen Endspitzabschnitt (49a) der Lippe (49) gegen die Dachschiene (32) klemmt,
**dadurch gekennzeichnet, dass** das Seitenformteil (43) in einen spritzgeformten Vorderendabschnitt (45), einen stranggepressten Mittelabschnitt (46) von vorbestimmten Querschnitt und einen spritzgeformten Hinterendabschnitt (47) aufgeteilt ist.

2. Dachstruktur (30) nach Anspruch 1,
**dadurch gekennzeichnet, dass** der Vorderendabschnitt (45) einen vorderen Vorsprung (51) aufweist, der davon auswärts absteht, und der Hinterendabschnitt (47) einen hinteren Vorsprung (52) aufweist, der davon auswärts absteht.

3. Dachstruktur (30) nach Anspruch 1,
**dadurch gekennzeichnet, dass** der Vorderendabschnitt (45) des Seitenendabschnitts (43) eine Rampenregion (59) aufweist, bei der ein Abstand zwischen der Lippe (49) und der oberen Fläche (48a) des Seitenformteilkörpers (48) vor dem Vorderendabschnitt (45) graduell kurz wird, so dass eine Tiefe des Abflusskanals (38) vor dem Vorderendabschnitt (45) graduell kurz wird.

4. Dachstruktur (30) nach Anspruch 1,
**dadurch gekennzeichnet, dass** die Dachplatte (41) eine Glasplatte ist.

## Revendications

1. Structure de toit (30) pour un véhicule (10), comprenant :
un panneau de toit (41) fourni sur un corps de véhicule (11) du véhicule (10) ;
un moulage latéral (43) comprenant un corps de moulage latéral (48) pour couvrir un côté latéral (41a) du panneau de toit (41), et une lèvre (49) se projetant vers l'extérieur à partir du corps de moulage latéral (48), la lèvre (49) étant située plus bas qu'une surface supérieure (48a) du corps de moulage latéral (48) ;
un rail de toit (32) pour supporter le moulage latéral (43) ;
un panneau latéral (33) disposé vers l'extérieur du rail de toit (32) et connecté à celui-ci ;
un moulage d'égouttement (37) s'étendant le long du moulage latéral (43) pour couvrir une connexion (34) du rail de toit (32) et le panneau latéral (33) ; et
le moulage d'égouttement (37) et le moulage latéral (43) définissant en commun un canal de drainage (38) avec le moulage d'égouttement (37) serrant une portion d'extrémité de bout (49a) de la lèvre (49) contre le rail de toit (32),
**caractérisé en ce que** le moulage latéral (43) est séparé en une section d'extrémité avant moulée par injection (45), une section centrale extrudée (46) de coupe transversale prédéterminée, et une section d'extrémité arrière moulée par injection (47).

2. Structure de toit (30) selon la revendication 1,
**caractérisée en ce que** la section d'extrémité avant (45) a une projection avant (51) se projetant vers l'extérieur à partir de celle-ci, et la section d'extrémité arrière (47) a une projection arrière (52) se projetant vers l'extérieur à partir de celle-ci.

3. Structure de toit (30) selon la revendication 1,
**caractérisée en ce que** la section d'extrémité avant (45) du moulage latéral (43) a une région de rampe (59) où une distance entre la lèvre (49) et la surface supérieure (48a) du corps de moulage latéral (48) devient progressivement courte vers l'avant de la section d'extrémité avant (45) de sorte qu'une profondeur du canal de drainage (38) devienne progressivement petite vers l'avant de la section d'extrémité avant (45).

4. Structure de toit (30) selon la revendication 1,
**caractérisée en ce que** le panneau de toit (41) est un panneau de verre.
